# EUROPEAN PATENT APPLICATION

(11) **EP 1 411 033 A1**
(43) Date of publication of application: **21.04.2004**
(21) Application number: 03256220.9
(22) Date of filing: 02.10.2003
(51) Int. Cl.: C01G 23/053, C01G 23/08

(54) **Method for producing titanium oxide**

(30) Priority: 02.10.2002 JP 2002292103
(71) Applicant: Sumitomo Chemical Company, Limited, Chuo-ku Osaka 541-8550 (JP)
(72) Inventor: Sakatani, Yoshiaki, Niihama-shi Ehime (JP); Okusako, Kensen, Niihama-shi Ehime (JP); Koike, Hironobu, Saijo-shi Ehime (JP)
(74) Representative: Cresswell, Thomas Anthony

(57) **Abstract**

A titanium oxide showing high photocatalytic activity with a small particle size can be efficiently produced in a method which comprises the steps of: (1) mixing, together or sequentially, a titanium compound, a base and a foaming agent, wherein the molar amount of the hydroxyl group provided by the base is about 2.1 times to about 3 times the molar amount of the titanium atom in the titanium compound; and (2) calcining a solid resulting from said mixing, together or sequentially, of said titanium compound, said base and said foaming agent.

## Description

### Technical Field of the Invention

The present invention relates to a method for producing a titanium oxide. More specifically, the present invention relates to a method for producing a titanium oxide fine particle useful for preparing a photocatalytic film.

### Background of the Invention

The photocatalytic properties of titanium oxide have been examined to remove the odor in the atmosphere or to prevent glass windows or walls along a road from getting dirty. To prevent the glass window or the like from getting dirty, it would be useful to produce a film of the titanium oxide on the surface of the glass window. The production of the film typically is conducted by mixing together a solvent and the titanium oxide and spreading the resulting liquid on the glass window. It would be useful for the titanium oxide utilized in such cases to have no aggregation and to have a small particle diameter.

Conventionally, methods for producing a titanium oxide with a relatively small particle diameter have been known. For example, Japanese Patent Application Laid-Open No. 2001-246247 describes a process for producing such a titanium oxide, wherein an alkoxide of titanium is hydrolyzed to obtain a titanium hydroxide, followed by an acid treatment or an alkali treatment. Such a process, however, fails to provide a titanium oxide having a sufficient photocatalytic activity.

### Summary of the Invention

One of objects of the present invention is to provide a method for producing a fine-particle titanium oxide which has a sufficient photocatalytic activity and suitably provides a film containing titanium oxide, preferably, with a smooth surface. Such a titanium oxide is useful for a photocatalytic material which may be contained in an applying composition utilized to confer photocatalytic properties to automobile components or building components, such as glass windows or walls along the side of a road.

The inventors of the present invention have studied on a method for producing a titnaium oxide perticle with a small particle size while maintaining a high photocatalytic activity, and finally, the present invention has been accomplished.

The present invention provides a method for producing a titanium oxide, which comprises:
(1) mixing together or sequentially a titanium compound, a base and a foaming agent, wherein the hydroxyl group provided by the base is in a molar amount of about 2.1 times to about 3 times of the titanium atom in the titanium compound; and
(2) calcining a solid resulting from said mixing together or sequentially of said titanium compound, said base and said foaming agent.

### Brief Description of the Drawings

Figure 1 is an illustration of a container which can be utilized for producing a mixture in the present invention. The container is equipped with a stirrer which comprises an agitating blade.
Figure 2 is an illustration of a device which can be utilized to produce a mixture in the present invention.

### Detailed Description of the Invention

The present invention provides a method for producing titanium oxide. In the production method, a titanium compound, a base and a foaming agent are mixed together or sequentially.

Examples of the titanium compound to be used in the present invention include a titanium trichloride, a titanium tetrachloride, a titanium oxychloride, a titanium sulfate, a titanium oxysulfate, a titanium tetramethoxide, a titanium tetraethoxide, a titanium tetra-i-propoxide, a titanium tetra-n-propoxide, a titanium tetra-n-butoxide, a titanium tetra-i-butoxide, a titanium tetra-sec-butoxide, a titanium tetra-t-butoxide, a titanium tetra-octadecyloxide, a titanium tetraxis(2-ethylhexyloxide), a titanium tetrastearyloxide, a titanium dimethoxydibutoxide, a titanium diethoxydipropoxide and the like.

It is noted that all amounts of the titanium compound utilized as a starting material in the present invention is not a titanium oxide, while it is permissible that a partial amounts of the titanium compound utilized is be a titanium oxide.

Examples of the base to be used in the present invention include a lithium hydroxide, a sodium hydroxide, a potassium hydroxide, a sodium carbonate or an aqueous ammonia; a magnesium hydroxide, a calcium hydroxide, a barium hydroxide; a hydrazine, a hydroxylamine; a monoethanolamine; an acyclic amine compound; a cyclic fatty amine compound; and the like. Among them, an aqueous ammonia is preferred. When utilizing an aqueous solution of the base, the base concentration may be at least about 0.05 % by weight and at most about 50 % by weight, based on the total amount of the aqueous solution.

The amount of the base utilized in the present invention can be measured in terms of the molar amount of the hydroxyl group provided by the base, based on the titanium atom in the titanium compound. The base may be used so that the base provides a hydroxide group in a molar amount of from about 2.1 times to about 3 times the molar amount of the titanium atom in the titanium compound to be mixed with the base. When the molar amount of the hydroxide group is smaller than about 2.1 times of the molar amount of the titanium atom, the resulting titanium oxide tends to have a large particle size. Also, when the molar amount of hydroxide group is larger than about 3 times of the molar amount of the titanium atom, the resulting titanium oxide tends to have a large particle size. It is preferable that the molar amount of the hydroxide group is at least about 2.3 times, more preferably at least about 2.5 times of the molar amount of the titanium atom. Further, it is preferable that the molar amount of the hydroxide group is at most about 2.9 times, and more preferably at most about 2.8 times of the molar amount of the titanium atom. It is noted that, as described above, the molar amount of the base to be used may be measured in terms of the hydroxide group provided by the base. For example, when an aqueous ammonium (NH₄OH) is used as the base, 1 mole of the aqueous ammonium would provide 1 mole of the hydroxide group. In such cases, about 2.1 moles to about 3 moles of the aqueous ammonium can be used for 1 mole of the titanium atom of the titanium compound. Further, when a magnesium hydroxide (Mg(OH)₂) is used as the base, 1 mole of the magnesium hydroxide would provide 2 moles of the hydroxide group. In such cases, about 1.05 moles to about 1.5 moles of the magnesium hydroxide can be used for 1 mole of the titanium atom of the titanium compound.

The foaming agent to be used in the present invention is an agent (except water) which provides foaming and/or gas- (or pore-) forming effect thereof due to its decomposition, its vaporization or its reaction with the titanium compound and/or the base, when a solid resulting from the mixing of the titanium compound, the base and the foaming agent is calcined.

Examples of the foaming agent include a peroxide compound, an azo compound, a nitroso compound, an azide compound, an amino acid and a polyol compound.

Examples of the peroxide compound include a hydrogen peroxide, an ammonium peroxoborate, a sodium peroxoborate, an ammonium peroxodisulfate, a sodium peroxodisulfate, an ammonium peroxohydrogendisulfide, a sodium peroxohydrogendisulfide, an ammonium peroxonitrate, a sodium peroxonitrate, an ammonium peroxophosphate, a sodium peroxophosphate, an ammonium peroxocarbonate, a sodium peroxocarbonate, a polytungsten base and the like. The polytungsten base is encompassed by the following formula (I):

WO₃·mCO₂·nH₂O₂·pH₂O (I)

wherein "m" represents at least 0 and at most 0.25 (0 ≦m ≦ 0.25), "n" represents at least 0.05 and at most 1 (0.05≦n≦ 1), and "p" represents at least 2 and at most 3 (2≦p≦3).

Examples of the azo compound include an azodicarbonamide, an azobisisobutyronitrile, a diazoaminobenzene and the like.

Examples of the nitroso compound include an N,N'-dinitroso=N,N'-dimethylterephthalamide. Examples of the azide compound include a hydrogen azide. Examples of the amino acid include a glycine. Examples of the polyol compound include an ethylene glycol, a propylene glycol, a 1,4-butylene glycol, a 1,5-pentamethylene glycol, a 1,6-hexamethylene glycol, a trimethylolpropane and the like.

Among them, the peroxide compounds are preferred. Hydrogen peroxide is more preferred.

The molar amount of the foaming agent utilized in the present invention can be measured based on the titanium atom in the titanium compound. The molar amount of the foaming agent may be at least about 0.05 times the molar amount of the titanium atom in the titanium compound to be mixed with the foaming agent. A larger amount of the foaming agent tends to result in a titanium oxide having a smaller particle size, desirably. It is preferable that the molar amount of the foaming agent is at least about 0.5 times and more preferably at least about identical to (1 time) the molar amount of the titanium atom of the titanium compound. Further, the molar amount of the foaming agent is preferably at most about 5 times the molar amount of the titanium atom of the titanium compound. Even if the foaming agent is used in the molar amount of larger than about 5 times the molar amount of the titanium atom in the titanium compound, the resulting titanium oxide is difficult to have a smaller particle size corresponding to such a large amount of foaming agent, and the titanium oxide may have insufficient photocatalytic activities.

The foaming agent may be mixed with an inorganic acid and/or an organic acid, before mixing the foaming agent with the titanium compound, the base or a product resulting from mixing the base and the titanium. Examples of such an inorganic acid include a sulfuric acid, a hydrochloric acid, a nitric acid, a phosphoric acid and the like. Examples of such an organic acid include an oxalic acid, a malonic acid, a citric acid and the like.

In the method for the present invention, the titanium compound, the base and the foaming agent are typically mixed for the purposes of producing an intermediate that produces the titanium oxide after being calcined. As such, the foaming agent, the titanium compound and the base can be mixed together or mixed sequentially in any order. For example, the titanium compound, the base and the foaming agent may be mixed together at once. Alternatively, the titanium compound may be first mixed together with the foaming agent, and the base may then be mixed together with the product resulting from mixing the titanium compound with the foaming agent. Further, the titanium compound may be first mixed together with the base, and the foaming agent may then be mixed together with the product resulting from mixing the titanium compound and the base. Furthermore, the base may be first mixed together with the foaming agent, and the titanium compound can be mixed together with the product resulting from mixing the base and the foaming agent.

Typically, the foaming agent, titanium compound and the base are mixed together or sequentially in the presence of water. A container equipped with a stirrer can be employed to mix together or sequentially the titanium compound, foaming agent and the base. Four examples of utilizing the container are given below, but the present invention is not limited thereto. First, the base and a mixture (for example, an aqueous solution) of the titanium compound with the foaming agent can be continuously added to the container from distinct routes, while stirring the contents in the container. Second, as a one-pot procedure, the titanium compound and the foaming agent can be first added to the container and then the base can be continuously added to the container, while stirring the contents therein. Third, as another one-pot procedure, the foaming agent can be added to the container, and then the titanium compound and the foaming agent can be continuously added to container from distinct routes, while stirring the contents therein. Fourth, the base, foaming agent and the titanium compound may be continuously added to the container from distinct routes, while stirring the contents therein. Among such examples, it is preferable to continuously add the base and the mixture of the titanium compound with the foaming agent to the container from distinct routes, while stirring the contents in said container. The mixing may be conducted so that the resulting mixture may have a pH of from 4 to 8, preferably has a pH of from 5 to 7, during the mixing.

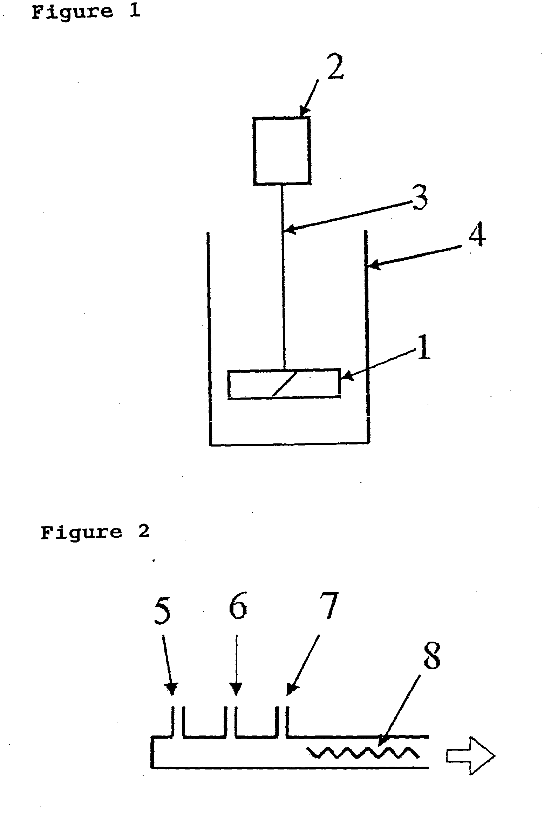

A device depicted in Figure 1 or Figure 2 can be utilized in the present invention. The device depicted in Figure 1 has an agitating blade 1, a motor 2, a container 4, and a stirring rod 3 that transports the kinetic energy from the motor 2 to the blade 1. The blade 1 may be in various forms, such as a propeller, a flat blade, an angular-flat blade, a pitched blade, a flat-blade turbine, a retreated blade, a pfaudler-type blade, a brumagin-type blade and the like. The device can mix the contents in the container thereof in accordance with known methods such as central mixing methods, eccentrical mixing methods, side-entering mixing methods (as disclosed in, for example, Chemical Engineering Enchiridion, 5th edition, pages 891-893, 1988) and the like. In mixing the contents in the container, the blade 1 may be spun at a circumferential speed of at least about 0.1 m/s and preferably at least about 1 m/s.

The device depicted in Figure 2 can mix the base, titanium compound and foaming agent with no blade. The device depicted in Figure 2 contains feeders 5, 6 and 7 and a line mixer 8. The titanium compound, the base and the foaming agent can be provided continuously in the device depicted by Figure 2, for example, by providing the titanium compound through feeder 5, providing the foaming agent through feeder 6 and providing the base through feeder 7.

The titanium compound, the base, and the foaming agent may be mixed together or sequentially at a temperature of at most about 65 °C, preferably at most about 50 °C and more preferably at most about 30 °C . Further, the titanium compound, the base and the foaming agent may be mixed together or sequentially at a temperature of at least about 2 °C, preferably at least about 5 °C .

A slurry is typically produced when mixing the foaming agent, titanium compound and the base. The solids of the slurry are typically separated from the residual liquid in the slurry, if any. The separation of the solids may be conducted by a method such as pressure filtration, vacuum filtration, centrifuge and decantation. The resulting solid may be optionally washed with, for example, water, an aqueous ammonia, an aqueous hydrogen peroxide or the like. By separating and washing the solid, water-soluble salts (such as an ammonium chloride, an ammonium sulfate and the like) produced as a result of producing the solid can be separated from the solid.

It is preferable to age the resulting solid (with or without the wash) before the solid is calcined below. To age the solid, the solid can be maintained at a particular temperature. To provide better dispersion properties to the titanium oxide, it is preferable to age the solid in the presence of a base. Examples of such a base utilized to age the solid include an aqueous ammonia. The concentration of the base thereof may be at least about 0.05 % by weight and at most about 50 % by weight, based on the amount of the base. The base thereof is utilized to age the solid in an amount such that the base provides a hydroxide group in a molar amount of from about 0.1 time to about 2 times the molar amount of the titanium atom in the titanium compound utilized to produce the slurry.

The temperature for aging the solid may be at least about 0 °C , preferably at least about 5°C , and may be at most about 80 °C , preferably at most about 50 °C . The period of time for aging the solid may be at least about 0.01 hour, preferably at least about 0.5 hour, and may be at most about 60 hours, preferably at most about 24 hours.

The base utilized to age the solid may be identical or distinct in type and in concentration with the base mixed with the titanium compound, the foaming agent or a product of the titanium compound and the foaming agent. The aged solid is washed, if needed. The washing of the aged solid can be conducted in a method such that the solid is mixed with a washing solution, and then the aged solid is recovered with a method such as pressure filtration, vacuum filtration, centrifuge, decantation and the like. Examples of the washing solution utilized to wash the aged solid include water, an aqueous ammonia, an aqueous hydrogen peroxide and the like.

The solid is typically calcined at a temperature of at least about 300°C , preferably at least about 330 °C . Further, the solid is typically calcined at a temperature of at most about 600 °C , preferably at most about 500 °C and more preferably at most about 400 °C . The solid may be calcined in air, nitrogen, oxygen, argon, helium, ammonia, steam (water vapor) and the like. A furnace may be utilized to calcine the solid. Examples of such furnaces include a pneumatic conveying dryer, a tunnel furnace, a rotary furnace and the like.

The titanium oxide thus produced is a particle that shows photocatalytic activity. The average particle diameter of the titanium oxide may be at most about 10 µm, preferably at most about 5 µm. The crystallization structure of the titanium oxide may be anatase.

The titanium oxide may carry an acidic metal oxide or basic metal compound on its surface. The acid metal oxide which can be carried on the surface of the titanium oxide may have a Lewis acidic property or a Bronsted acidic property or both.

Examples of such acidic metal oxides include an oxide of one metal such as zirconium, hafnium, vanadium, niobium, tantalum, molybdenum, tungsten, manganese, iron, cobalt, nickel, copper, aluminum, gallium, indium and tin; a binary metal oxide such as silicon-zinc, silicon-zirconium, silicon-magnesium, silicon-calcium, silicon-gallium, silicon-aluminum, similcon-lanthanum, silicon-titanium, titanium-zinc, titanium-copper, titanium-zinc, titanium-aluminum, titanium-zirconium, titanium-lead, titanium-bismuth, titanium-iron, zinc-magnesium, zinc-aluminum, zinc-zirconium, zinc-lead and zinc-antimony; and the like. Further, the titanium oxide may carry a ternary oxide, which has an acidic property. Among them, an oxide of one metal is preferred as the acidic metal oxide to be carried on the titanium oxide. It is more preferable that the acidic metal oxide is an oxide of one metal such as zirconium, vanadium, niobium, tantalum, molybdenum, tungsten, manganese, iron, cobalt, nickel, copper, aluminum or tin.

The basic metal compound which may be carried on the surface of the titanium oxide may have a Lewis basic property or a Bronsted basic property or both. Examples of such basic metal compounds include a univalent- or bivalent-metal oxide such as a sodium oxide, a potassium oxide, a magnesium oxide, a calcium oxide, a barium oxide, a lanthanum oxide, a cerium oxide, a zinc oxide; a univalent- or bivalent-metal hydroxide such as a sodium hydroxide, a potassium hydroxide, a magnesium hydroxide, a calcium hydroxide, a barium hydroxide, a lanthanum hydroxide, a cerium hydroxide, a zinc hydroxide; a univalent- or bivalent-metal carbonate such as a sodium carbonate, a potassium carbonate, a magnesium carbonate, a calcium carbonate, a barium carbonate, a lanthanum carbonate, a cerium carbonate, a zinc carbonate; and the like.

The titanium oxide may also carry both the acidic metal oxide and the basic metal compound. Alternatively, the titanium oxide carrying the acidic metal oxide and the titanium oxide carrying the basic metal compound may be mixed with each other to be used together.

The molar amount of the carried acidic metal oxide or the carried basic metal compound or both may be at most about 50 %, preferably at most about 30 % and more preferably at most about 10 % in terms of metal atom, based on the molar amount of titanium atom in the titanium oxide to be used as a carrier.

The titanium oxide (which may carry the acidic metal oxide or the carried basic metal compound or both) obtained in the present invention can be mixed with a solvent such as a water-soluble solvent and an organic solvent, to provide an applying composition which can be utilized to make a film having photocatalytic properties.

The film produced by the applying composition shows high photocatalytic activity with the irradiation of light such as lights from fluorescent lamps, halogen lamps, xenon lamps, neon lamps, luminescent diodes, mercury lamps, sodium lamps and the like. Further the film shows photocatalytic activity with ultraviolet light. As such, the light source may also be sunlight or a backlight.

It is preferable to utilize the titanium oxide produced by the method for the present invention as a applying composition (or a spreading agent) produced by mixing the titanium oxide with a solvent. Further, the titanium oxide can also be utilized to produce an molded article by molding a mixture of the titanium oxide with a resin, a bonding agent, an antistatic agent, an adsorbent or the like. Examples of the resin include a polyethylene, a polypropylene, a polystyrene, a polyamide, a polyimide, a polymethacrylate, a polycarbonate, a polyethyleneterephthalate, a tetrafluoroethylene and the like. Examples of the bonding agent include a polyvinyl alcohol, a carboxymethyl cellulose, a methyl cellulose, a nitro cellulose, a water glass, a silica sol, an alumina sol, a zirconia sol and the like. Examples of the antistatic agent include a polyoxyethylenealkyl ether, a polyoxyethylenealkyl amine, a polyoxyethylenealkylphosphate ester, an alkylphosphate salt, a benzylammonium salt and the like. Examples of the adsorbent include a zeolite, a hydroxyapatite, an activated terra alba, an activated carbon, an activated aluminum, a silica gel, a mesoporous silica and the like. The molded article typically shows high photocatalytic activity with visible light.

As described above, in accordance with the present invention, a titanium oxide particle showing high photocatalytic activity with a small particle size can be efficiently produced in a simple method.

The invention being thus described, it will be apparent that the same may be varied in many ways. Such variations are to be regarded as within the spirit and scope of the invention, and all such modifications as would be apparent to one skilled in the art are intended to be within the scope of the following claims.

The entire disclosure of the Japanese Patent Application No. 2002-292103 filed on October 4, 2002, indicating specification, claims, drawings and summary, are incorporated herein by reference in their entirety.

### Examples

The present invention is described in more detail by following Examples, which should not be construed as a limitation upon the scope of the present invention.

The average particle sizer and the crystallization structure were measured by the following methods.

### Average particle size (µm):

After dissolving a sample titanium oxide in an 0.2 % by weight aqueous solution of sodium hexametaphosphate (manufactured by Wako Pure Chemicals Industries), the size of 50 % by volume of cumulative distribution of the sample titanium oxide was measured with a particle size distribution analyzer (trade name: Microtrac HRA, model: 9320-X100, manufactured by Nikkiso Co., Ltd.). The resulting value was designated as the average particle diameter.

### Crystallization Structure:

The crystallization structure was measured with an X ray diffraction device (trade name: RAD-IIA, manufactured by Rigaku Corporation).

### Example 1

### Preparation of an aqueous solution containing titanium:

After dissolving 102 g of a titanium oxysulfate (manufactured by Soekawa Chemical Co., Ltd.) in 238 g of water, 47 g of aqueous solution of a hydrogen peroxide (manufactured by Mitsubishi Gas Chemical Company) was added to the resulting solution to produce a red-violet aqueous solution containing titanium. The molar amount of the aqueous solution of the hydrogen peroxide was identical to the molar amount of the titanium atom of the titanium oxysulfate. ,

### Production of titanium oxide:

Three hundred grams (300g) of ion exchange water was added to a container equipped with a flat blade having a diameter of 7.5 cm, an electric motor, and a stirring rod. The flat blade was spun at 400 rpm (circumferential speed of 1.6 m/s). While mixing the contents therein, the above aqueous solution containing titanium and 74g of 25 % by weight of aqueous ammonia (special grade, manufactured by Wako Pure Chemical Industries, Ltd.) was dropped into the container through distinct pipes. While dropping the aqueous ammonia and aqueous solution containing titanium, the container was cooled by utilizing a refrigerant on the outside of the container. During this time, the temperature of the contents in the container was about 23 °C to 29 °C, and the pH thereof was 5.5 to 6.5. The molar amount of the hydroxide group provided by the aqueous ammonia dropped into the container was 2.6 times the molar amount of the titanium atom in the titanium oxysulfate utilized to prepare the aqueous solution containing titanium.

After dropping the aqueous ammonia and aqueous solution containing titanium, the contents in the container was stirred at 400 rpm for 1 hour at a temperature of 26 °C to 29 °C. Subsequently, another 41 g of the 25 % by weight aqueous ammonia (special grade, manufactured by Wako Pure Chemical Industries, Ltd.) was added thereto, to obtain a slurry. While adding the 41 g of the 25% by weight aqueous ammonia, the temperature of the slurry was 26 °C. The molar amount of the hydroxide group provided by the 25% by weight aqueous ammonia added to obtain the slurry was 1.4 times the molar amount of the titanium atom in the titanium oxysulfate utilized to prepare the aqueous solution containing titanium.

After mixing the above slurry at 400 rpm at a temperature of 26 °C for 2 hours, the slurry was filtered. After washing the resulting solid obtained from the slurry with ion exchange water, the solid was dried in air at a temperature of 150 °C for 12 hours. Subsequently, the dried solid was calcined at a temperature of 370 °C in air for 1 hour to produce an anatase-type titanium oxide. The average particle size of the titanium oxide was 2 µm.

### Photocatalytic activity measurement of the titanium oxide:

In a sealed-type glass container (diameter: 8 cm, height: 10 cm, volume: about 0.5 L), was placed a 5-cm diameter glass Petri dish on which 0.3g of the above obtained titanium oxide was placed. The container was filled with a mixed gas having an oxygen content of 20 % by volume and a nitrogen content of 80 % by volume, was sealed with 13.4 µmol of acetoaldehyde and was then irradiated with visible light from outside of the container. The visible light irradiation was carried out using a light source device (manufactured by USHIO INC., trade name: Optical Modulex SX-UI500XQ) which is equipped with a 500 W xenon lamp (manufactured by USHIO INC., trade name: Lamp UXL-500SX), an ultraviolet cutting filter (manufactured by Asahi Techno Glass Co., Ltd., trade name: Y-45) cutting off ultraviolet light having a wavelength of about 430 nm or shorter and an infrared light cutting filter (manufactured by USHIO INC., trade name: Supercold Filter) cutting off infrared light having a wavelength of about 830 nm or longer. The photocatalytic activity of the titanium oxide was evaluated by measurement of a concentration of carbon dioxide, that is the product from the decomposition of acetoaldehyde due to the irradiation of visible light. The carbon dioxide concentration was measured using a photoacoustic multigas monitor (Model: 1312, manufactured by INNOVA) with the passage of time. The producing rate of carbon dioxide was 15.1 µmol/h per one gram of the titanium oxide.

### Example 2

Three hundred grams (300g) of ion exchange water was added to the container equipped with a flat blade, an electric motor, and a stirring rod, which was utilized in Example 1. While mixing the contents at 400 rpm, each of 76 g of 25% by weight aqueous ammonia (special grade, manufactured by Wako Pure Chemical Industries, Ltd.) and the aqueous solution containing titanium prepared similarly to Example 1 were dropped into the container. During this time, the temperature of the contents in the container was 22 °C to 29 °C, and the pH thereof was 6 to 7 . The molar amount of the hydroxide group provided by the dropped aqueous ammonia was 2.7 times the molar amount of the titanium atom in the utilized titanium oxysulfate.

After dropping the 25% by weight aqueous ammonia (special grade, manufactured by Wako Pure Chemical Industries, Ltd.) and the aqueous solution containing titanium, the contents in the container were mixed at 400 rpm at a temperature of 27 °C to 29 °C for 1 hour. Subsequently, another 39 g of the 25 % by weight aqueous ammonia (special grade, manufactured by Wako Pure Chemical Industries, Ltd.) was added to the container, to obtain a slurry. While adding the 39g of the 25 % by weight aqueous ammonia, the temperature of the slurry was 27 °C. The molar amount of the hydroxide group provided by the 25 % by weight aqueous ammonia added to obtain the slurry was 1.3 times the molar amount of the titanium atom in the utilized titanium oxysulfate.

After mixing the above slurry at 400rpm at a temperature of 27 °C for 1 hour, the slurry was filtered. After washing the resulting solid obtained from the slurry with ion exchange water, the solid was dried in air at a temperature of 150 °C for 12 hours. Subsequently, the dried solid was calcined at a temperature of 370 °C in air for 1 hour, to produce anatase-type titanium oxide. The average particle size of the titanium oxide was 1.4 µm.

The titanium oxide was evaluated with the method (Photocatalytic activity measurement of the titanium oxide) utilized in Example 1. The producing rate of carbon dioxide was 11.4 µmol/h per one gram of the titanium oxide.

## Claims

1. A method for producing a titanium oxide, which comprises the steps of:
(1) mixing, together or sequentially, a titanium compound, a base and a foaming agent, wherein the molar amount of the hydroxyl group provided by the base is about 2.1 times to about 3 times the molar amount of the titanium atom in the titanium compound; and
(2) calcining a solid resulting from said mixing, together or sequentially, of said titanium compound, said base and said foaming agent.

2. A method according to claim 1, wherein the titanium compound is at least one compound selected from a titanium trichloride, a titanium tetrachloride, a titanium oxychloride, a titanium sulfate, a titanium oxysulfate, a titanium tetramethoxide, a titanium tetraethoxide, a titanium tetra-i-propoxide, a titanium tetra-n-propoxide, a titanium tetra-n-butoxide, a titanium tetra-i-butoxide, a titanium tetra-sec-butoxide, a titanium-t-butoxide, a titanium tetra-octadecyloxide, a titanium tetrakis(2-ethylhexyloxide), a titanium tetrastearyloxide, a titanium dimethoxydibutoxide and a titanium diethoxydipropoxide.

3. A method according to claim 1 or 2, wherein the foaming agent is at least one agent selected from a peroxide compound, an azo compound, a nitroso compound, an azide compound, an amino acid and a polyol compound.

4. A method according to any one of claims 1 to 3, wherein the foaming agent is a peroxide compound.

5. A method according to any one of claims 1 to 4, comprising the steps of:
(i) mixing the foaming agent with the titanium compound;
(ii) continuously adding the base and the mixture of the titanium compound with the foaming agent to a container from distinct routes, while stirring the contents in the container; and
(iii) calcining a solid resulting from step (ii).

6. A method according to any one of claims 1 to 5, wherein the base, the foaming agent and the titanium compound are mixed at a temperature of at most about 65°C.

7. A method according to any one of claims 1 to 6, further comprising the step of aging the solid before the calcination thereof.

8. A method according to claim 7, wherein said aging is conducted in the presence of a base.
